# EUROPÄISCHE PATENTSCHRIFT

(11) **EP 0 697 547 B1**
(45) Veröffentlichungstag und Bekanntmachung des Hinweises auf die Patenterteilung: **03.12.1997**
(21) Anmeldenummer: 95112544.2
(22) Anmeldetag: 09.08.1995
(51) Int. Cl.: F16H 57/02

(54) **Getriebe**
Gearbox
Boîte de vitesse

(30) Priorität: 18.08.1994 DE 9413344 U
(43) Veröffentlichungstag der Anmeldung: 21.02.1996
(73) Patentinhaber: Getriebebau-NORD Schlicht + Küchenmeister GmbH & Co., D-22941 Bargteheide (DE)
(72) Erfinder: Hofmann, Edwin, D-23843 Bad Oldesloe (DE)
(74) Vertreter: Glawe, Delfs, Moll & Partner

(56) Entgegenhaltungen:
- EP-A- 0 069 215
- EP-A- 0 387 367
- DE-A- 591 653
- FR-A- 2 664 346
- DESIGN ENGINEERING, Juli 1993 LONDON,GB, Seite 18 XP 000382403 'Geared motor units get in line by offering a choice'

## Beschreibung

Die Erfindung betrifft ein Getriebe mit einem Wellenlager, das in einem Lagerauge benachbart einer Montageöffnung aufgenommen ist. Aus Montagegründen ist das Lagerauge zu der Montageöffnung hin geschlitzt. Es ist ein Deckel vorgesehen, der sowohl die Lagerbohrung als auch die Montageöffnung nach außen hin abschließt. Bekannte Beispiele eines gattungsgemäßen Getriebetyps sind gezeigt in den deutschen Patentschriften 591 653 bzw. 41 21 299. Der Schlitz in dem die Lagerbohrung bildenden Lagerauge hat den Nachteil, daß das Lager auf einem Teil seines Umfangs ungestützt ist. Die Erfindung will diesen Nachteil vermeiden und eine breitere Schlitzung ermöglichen, als dies bislang mit Rücksicht auf die Lebensdauer des Lagers möglich war.

Erfindungsgemäß wird dieses Ziel dadurch erreicht, daß in dem dem Lagerauge benachbarten Deckel eine Bohrung enthalten ist, die das Lager über den größeren Teil seiner axialen Erstrekkung aufnimmt. Die Bohrung im Lagerauge dient dabei im wesentlichen der Zentrierung des Lagers und nur noch eingeschränkt zur Stützung. Gestützt wird das Lager vielmehr von der Bohrung im Deckel. Diese erhält ihre korrekte Lage dadurch, daß sie über das Lager von der Lagerbohrung des Lagerauges zentriert wird, bevor der Deckel mit dem Getriebegehäuse kraftübertragend verschraubt wird.

Zwar ist es bekannt (EP-A 69215), den Deckel einer Montageöffnung dadurch zu zentrieren, daß das der Montageöffnung benachbarte Lager nicht nur in dem Lagerauge angeordnet ist, sondern ein wenig in eine entsprechende Bohrung des Deckels hineinragt. Jedoch faßt das Lager bei der bekannten Ausführung nur so weit in die Deckelbohrung hinein, daß der Zentrierzweck erreicht werden kann. Eine Stützung des Lagers durch den Deckel ist nicht vorgesehen und bei einer nur auf den Randbereich des Lagers beschränkten Stützlänge auch nicht möglich, weil diese vornehmlich im Mittelbereich des Lagers verlangt wird. Sie findet bei der bekannten Ausführung ausschließlich im Lagerauge statt. Die Erfindung kehrt diese Verhältnisse um, indem das Lagerauge auf die Zentrierfunktion beschränkt und die Stützfunktion dem Deckel zugeordnet wird. Da das Lager vom Deckel auf seinem vollen Umfang gestützt wird und die Zentrierfunktion des Lagerauges durch die Schlitzung nicht beeinträchtigt wird, kann dank der Erfindung das Lagerauge ohne Schaden geschlitzt werden, und zwar auf einem größeren Umfangsteil, als dies bislang denkbar war.

Die Erfindung wird im folgenden näher unter Bezugnahme auf die Zeichnung erläutert, die vorteilhafte Ausführungsbeispiele veranschaulicht. Es zeigen:
- Fig. 1: einen Längsschnitt durch eine erste Ausführungsform,
- Fig. 2: einen Teilschnitt durch das Gehäuse während der Montage des Abtriebsrads
- Fig. 3: einen Teilschnitt gemäß Linie III-III der Fig. 4,
- Fig. 4: einen Querschnitt durch das Gehäuse gemäß Linie IV-IV der Fig. 1 im unmontierten Zustand, und
- Fig. 5: eine Teilansicht auf die Öffnungsseite des Gehäuses.

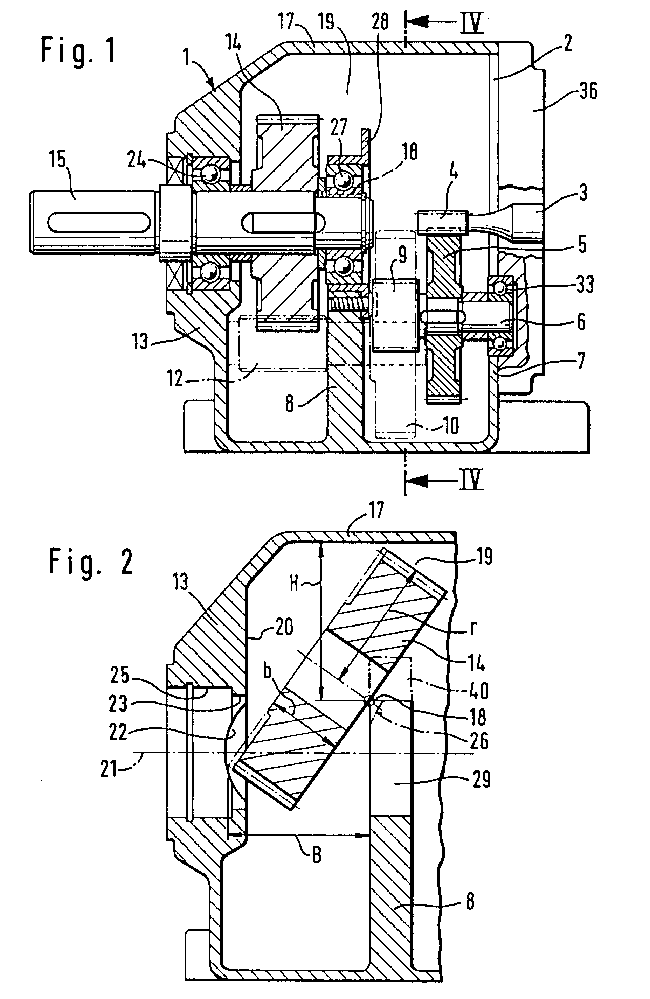

Das Getriebe umfaßt gemäß Fig.1 ein Gehäuse 1 mit einer Montageöffnung 2, auf die ein Deckel 36 aufsetzbar ist, der beispielsweise von dem Flansch eines Antriebsmotors gebildet sein kann. Aus dem Deckel ragt fliegend gelagert die Welle 3 mit Antriebsritzel 4 in das Getriebegehäuse 1. Das Ritzel wirkt mit dem Stirnrad 5 zusammen, das von der Welle 6 getragen ist, die einerseits in einem in die Montageöffnung 2 ragenden Lagerauge 7 und andererseits in einer Zwischenwand 8 gelagert ist, die einteilig mit dem Gehäuse 1 ausgebildet ist. Von dem Ritzel 9 der Welle 6 wird die Getriebebewegung über ein Stirnrad 10 auf ein Ritzel 12 übertragen. Das Ritzel 12 wirkt mit dem Abtriebsrad 14 zusammen, das auf der Abtriebswelle 15 sitzt, die einerseits in der Zwischenwand 8 und andererseits in der abtriebsseitigen Wand 13 des Getriebegehäuses gelagert ist. Für das bei der Montageöffnung 2 vorgesehene Lager 33 der Welle 6 ist in dem Lagerauge 7 eine Bohrung vorgesehen, die nur einen geringeren Teil der axialen Erstreckung des Lagers 33 aufnimmt. Der größere Teil des Lagers liegt in der im Deckel 36 gebildeten Lagerbohrung 35. Um die Montage größerer Teile durch die Montageöffnung 2 bei begrenzten Maßen des Getriebegehäuses zu ermöglichen, ist das Lagerauge 7 zur Montageöffnung 2 hin im Bereich 34 ausgeschnitten. Infolgedessen umfaßt es das Lager 33 nicht mehr vollständig.

Um dennoch eine hinreichende Stützung des Lagers 33 zu ermöglichen, wird erfindungsgemäß die Bohrung 35 im Deckel 36 tiefer ausgeführt; somit sitzt das Lager 33 mit dem größeren Teil seiner axialen Erstreckung in der Bohrung 35. Das Lagerauge 7 kann entsprechend dünner ausgeführt werden und dient hauptsächlich zur Zentrierung des Lagers 33, während die Stützfunktion durch die Bohrung 35 übernommen wird, die wiederum von dem Lagerauge 7 über das Lager 33 zentriert wird, bevor der Deckel 36 mit dem übrigen Gehäuse verschraubt wird.

Damit man das Abtriebsrad 14 in eine Einbaustelle zwischen der abtriebsseitigen Wand 13 und der Zwischenwand 8 des Gehäuses einsetzen kann, ist die Zwischenwand 8 bei der in Fig.1 gestrichelten Linie 18 gekappt, so daß darüber ein Montagedurchgang 19 geschaffen wird. Die Kante 18 der Zwischenwand 8 liegt so tief und die ihr gegenüberliegende Gehäuseoberwand 17 so hoch, daß der Montagedurchgang 19 hinreichende Höhe für die Montage des Abtriebsrads 14 hat. Dies ist in Fig. 2 deutlicher dargestellt, die das Abtriebsrad 14 in einer kritischen Durchgangsstellung während der Montage zeigt. Man erkennt, daß der Montagefreiraum für das Abtriebsrad 14 durch drei Begrenzungen bestimmt wird, nämlich erstens die Innenfläche der Gehäuseoberwand 17, zweitens die Oberkante 18 der Zwischenwand 8 und drittens die Innenfläche 20 der abtriebsseitigen Gehäusewand 13. Die Innenfläche 20 kann im kritischen Höhenbereich, der um die Höhe der Abtriebswellenachse 21 liegt, ein wenig ausgekehlt sein, wie es bei der Ausnehmung 22 gezeigt ist, um für die Montage mehr Platz zu schaffen. Die Ausnehmung 22 kann sich axial zumindest über den Bereich des Gehäusebundes 23 erstrecken, der die innenseitige Begrenzung für die das Wälzlager 24 aufnehmende Bohrung 25 bildet, weil der Gehäusebund 23 oberhalb und unterhalb des ausgekehlten Bereichs stehenbleiben kann. Die Ausnehmung 22 kann aber im allgemeinen auch noch ein wenig bis in den Bereich der Lagerbohrung 25 hineingezogen sein, wie es in Fig. 2 gezeigt ist, ohne daß dadurch die Abstützung des Lagers beeinträchtigt wird. Ferner kann die Kante 18 der Zwischenwand 8 zur Abtriebsseite hin abgeschrägt sein, wie dies in Fig. 2 durch die strichpunktierte Linie 26 angedeutet ist. Durch die Ausnehmung 22 und/oder Abschrängung 26 wird der Abstand B zwischen der Kante 18 und der Innenfläche 20 der abtriebsseitigen Wand 13 vergrößert; entsprechend geringer kann die Höhe H der Gehäuseoberwand 17 über der Kante 18 vorgesehen werden.

Damit für den Durchgang des Abtriebsrads 14 genügend Spielraum vorhanden ist, soll die Summe aus dem horizontalen Abstand B zwischen der Oberkante 18 der Zwischenwand 8 einerseits und der Innenfläche 20 der abtriebsseitigen Gehäusewand 13 und der Höhe H zwischen der Oberkante 18 der Zwischenwand 8 und der Innenfläche der Getriebeoberwand 17 etwa gleich der 1,5-fachen Summe aus Breite b und Radius r des Rades 14 sein.

Um dem in der Zwischenwand 8 vorgesehenen Lager 27 der Abtriebswelle 15 trotz der Kappung der Zwischenwand hinreichende Abstützung zu geben, ist ein Stützring 28 vorgesehen. Damit dieser von dem in der Zwischenwand verbleibenden Teil der Lagerbohrung 29 hinreichend zentriert und gestützt wird, liegt die Oberkante 18 der Zwischenwand 8 zweckmäßigerweise deutlich oberhalb der Abtriebswellenachse 21, so daß der Stützring 28 von der Lagerbohrung 29 auf mehr als 180 Grad umfaßt ist. Zwar ist es denkbar, die Zwischenwand auf der Höhe der Abtriebswellenachse oder darunter enden zu lassen; jedoch führt dies zu aufwendigeren Anforderungen an die Qualität der Befestigung und Zentrierung des Stützrings 28 an der Zwischenwand 8 und ist deshalb im allgemeinen nicht empfehlenswert.

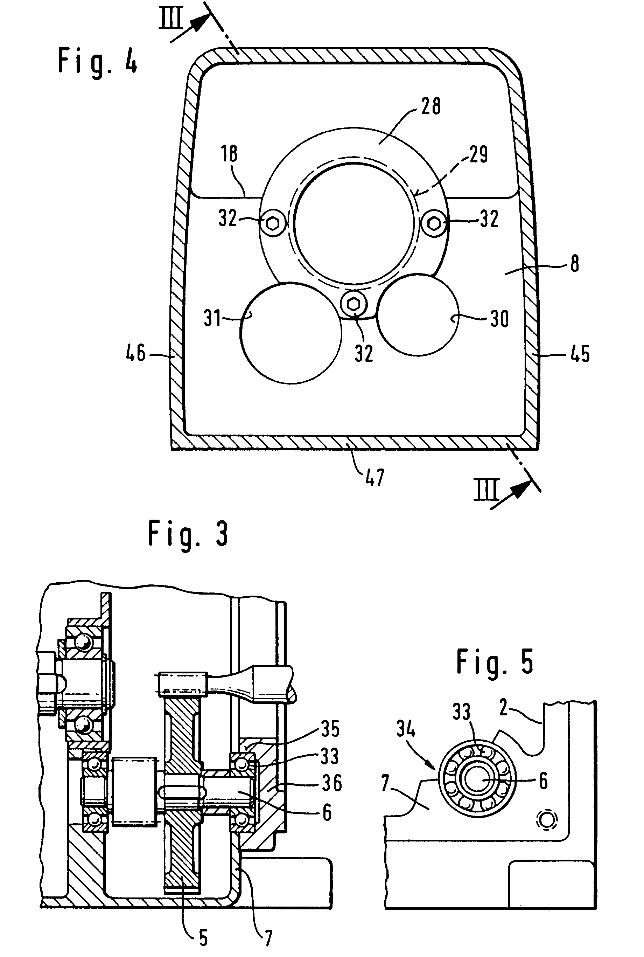

Der Stützring ist im Profil L-förmig. Dies ist deshalb zweckmäßig, weil dieses Profil ein hohes Widerstandsmoment besitzt und daher auch dann eine gute Stützwirkung gewährleistet, wenn der rohrförmige Teil des Profils, der für den Durchmesser der Lagerbohrung 29 und dadurch mittelbar auch für die Mindesthöhe der Oberkante 18 der Zwischenwand 8 verantwortlich ist, dünn ausgeführt ist. Außerdem hat der Flanschteil des Rings den Vorteil, daß er eine bequeme Befestigung mittels Schrauben 32 an der Zwischenwand 8 ermöglicht. Der Flansch des Stützrings 28 ist im Bereich der für die weiteren Wellen in der Zwischenwand 8 vorgesehenen Lagerbohrungen 30, 31 ausgeschnitten (Fig.4), was ohne Festigkeitseinbuße möglich ist, da zwischen den Lageraugen 30, 31 und der Oberkante 18 der Zwischenwand 8 hinreichender Befestigungsplatz für den Stützring 28 verbleibt.

Die Montage der Abtriebswelle vollzieht sich in der Weise, daß zunächst das Abtriebsrad 14 eingeführt, danach die Abtriebswelle 15 von der Abtriebsseite her mit dem abtriebsseitigen Lager eingeschoben wird und schließlich das Lager 27 mit dem Stützring 28 von der Seite der Montageöffnung her eingebracht wird.

## Patentansprüche

1. Getriebe mit einem Wellenlager (33), das in einem Lagerauge (7) eines Getriebegehäuses benachbart einer Montageöffnung (2) aufgenommen ist, wobei das Lagerauge (7) zu der Montageöffnung (2) hin geschlitzt ist, und mit einem die Montageöffnung (2) und das Lager (33) abdeckenden Deckel (36), dadurch gekennzeichnet, daß der Deckel (36) eine den größeren Teil der axialen Erstreckung des Wellenlagers (33) aufnehmende Bohrung (35) aufweist.

## Claims

1. A gearbox with a shaft bearing (33) which is accommodated in a bearing boss (7) of a gearbox housing adjacent an assembly opening (2), wherein the bearing boss (7) is slotted towards the assembly opening (2), and has a cover (36) covering the assembly opening (2) and the bearing (33), characterised in that the cover (36) has a bore (35) accommodating the majority of the axial extent of the shaft bearing (33).

## Revendications

1. Boîte de vitesses comprenant un palier d'arbre (33), reçu dans un logement de palier (7) d'un carter de boîte de vitesses, au voisinage d'une ouverture de montage (2), le logement de palier (7) étant fendu jusqu'à l'ouverture de montage (2), et munie d'un couvercle (36) recouvrant l'ouverture de montage (2) et le palier (33), caractérisée en ce que le couvercle (36) présente un alésage (35) recevant la plus grande partie de la longueur axiale du palier d'arbre (33).
